# EUROPEAN PATENT SPECIFICATION

(11) **EP 2 173 787 B1**
(45) Date of publication and mention of the grant of the patent: **12.06.2019**
(21) Application number: 08796697.4
(22) Date of filing: 28.07.2008
(51) Int. Cl.: C08G 73/10

(54) **CRYSTALLIZABLE POLYETHERIMIDES, METHOD OF MANUFACTURE, AND ARTICLES DERIVED THEREFROM**
KRISTALLISIERBARE POLYETHERIMIDE, HERSTELLUNGSVERFAHREN DAFÜR UND GEGENSTÄNDE DARAUS
POLYÉTHERIMIDES CRISTALLISABLES, PROCÉDÉ DE FABRICATION ET ARTICLES DÉRIVÉS DE CEUX-CI

(30) Priority: 26.07.2007 US 952065 P
(43) Date of publication of application: 14.04.2010
(73) Proprietor: SABIC Global Technologies B.V., 4612 PX Bergen op Zoom (NL)
(72) Inventor: PRAMEELA, Susarla, Clifton Park, New York 12065 (US); AMITABH, Bansal, Niskayuna, New York 12309 (US); WEI, Xiaolan, Clifton Park, New York 12065 (US); KAILASAM, Ganesh, Pearland, TX 77584 (US); GUGGENHEIM, Thomas Link, Mt. Vernon, Indiana 47620 (US); HAGBERG, Erik C., Clifton Park, New York 12065 (US); ODLE, Roy Ray, Mt. Vernon, Indiana 47620 (US); VENKATARAMAN Karthik, Evansville, Indiana 47712 (US)
(74) Representative: Office Freylinger
(86) International application number: PCT/US2008/071322
(87) International publication number: WO 2009/015383

(56) References cited:
- US-A- 4 565 858
- US-A- 4 675 366
- US-A- 4 769 476
- US-A- 4 794 157
- US-A- 5 262 516
- US-A1- 2005 080 228

## Description

### BACKGROUND

This disclosure relates to crystallizable polyetherimides, methods of manufacture, use in making fibers, and other articles derived therefrom.

Polyetherimides are a known class of polymers characterized by advantageous properties such as thermal stability and solvent resistance. Polyetherimides are especially useful in the manufacture of fibers because of their high flame resistance, good chemical resistance, and high glass transition temperature (T_{g}). Two widely used polyetherimides contains units derived from the reaction of an aromatic ether dianhydride, bisphenol A dianhydride (BPADA), with an aromatic diamine, meta- or para-phenylenediamine (mPD and pPD). The resulting polyetherimides are sold, for example, as ULTEM® 1000 and ULTEM® CRS 5001 by SABIC Innovative Plastics.

While suitable for their intended purposes, there nonetheless remains a perceived need in the art for melt-processible polyetherimides that form crystalline domains when oriented, e.g., in a fiber spinning or drawing process. Crystalline domains can act as physical crosslinks that allow polymer chain orientation to be preserved when exposed to temperatures near the T_{g}, but below the melting temperature (Tₘ). Semicrystalline fibers can thus possess a combination of good mechanical properties (due to high chain orientation) and good dimensional stability at temperatures between T_{g} and Tₘ of the polymer. Melt processability is another desirable trait that minimizes the need for solvent-based fiber formation operations.

A number of factors make it challenging to prepare melt-crystallizable polyetherimides that are adaptable to commercial production and use in fiber forming operations. Firstly, many known semicrystalline polyetherimides have melting temperatures greater than 400°C, which provides a number of challenges for fiber formation. Typical equipment for melt-spinning fibers is limited in handling such high temperatures; furthermore, while polyetherimides are quite thermally stable, such stability does not generally extend to temperatures substantially above 400°C. Therefore, Tₘ values above approximately 400°C are less suitable for fiber forming operations. Further, the high T_{g} of many polyetherimides (while desirable for many applications), in combination with the need for a Tₘ of less than about 400°C, can render the kinetics of crystallization from the melt state slow for practical application.

US 4 565 858 A discloses polyetherimides and their polyamic acid precursors that are derived from bisphenol A dianhydride, or a mixture thereof with pyromellitic dianhydride, and bis(4-aminophenyl) sulfone or a mixture thereof with m-phenylenediamine and/or p-phenylenediamine. The polyetherimides are characterized by high thermal stability and solvent resistance.

While it has been observed that polyetherimide polymers comprising repeating units derived from BPADA and pPD (BPADA-pPD) are crystallizable when exposed to certain solvents, they do not crystallize readily from the melt state. There accordingly remains a need in the art for alternative methods for the manufacture of melt processible, crystallizable polyetherimides, in particular semicrystalline polyetherimide fibers.

### SUMMARY

The present invention discloses a composition comprising a crystallizable polyetherimide derived from:
(a) a dianhydride component, comprising 96.8 mole % or more of 4,4'- bisphenol A dianhydride of formula (2) 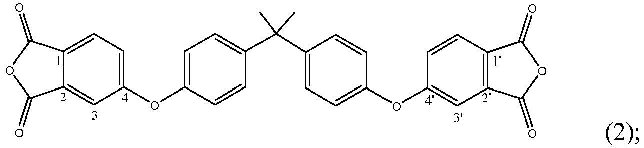 and
(b) a diamine component, consisting of para-phenylenediamine and less than 5.0 mole % of meta-phenylenediamine and optionally one or more diamine selected from the group consisting of p-phenylenediamine; benzidine; 1,5-diaminonaphthalene; bis(4-aminophenyl)methane; bis(4-aminophenyl)propane; bis(4-aminophenyl)sulfide; bis(4-aminophenyl)ether; 4,4'-diaminodiphenylpropane; 4,4'-diaminodiphenylmethane(4,4'-methylenedianiline); 4,4'-diaminodiphenylsulfide; 4,4'-diaminodiphenylsulfone; 4,4'-diaminodiphenylether(4,4'-oxydianiline); 1,5-diaminonaphthalene; 3,3'dimethylbenzidine; 4,3'-diaminodiphenylether; 1,3-bis(4-aminophenoxy)benzene; 4,4'-bis(4-aminophenoxy)biphenyl; and combinations thereof; wherein the crystallizable polyetherimide has a Tₘ from 250°C to 400°C and the difference between the Tₘ and T_{g} of the composition is equal to or more than 50°C.

In one embodiment, a crystallizable polyetherimide composition is derived from the polymerization of: (a) a dianhydride component, comprising more than 96.8 mole % of 4,4'- bisphenol A dianhydride or a chemical equivalent thereof; and (b) a diamine component comprising a diamine or a chemical equivalent thereof, wherein the crystallizable polyetherimide has a Tₘ from 250°C to 400°C and the difference between the Tₘ and T_{g} of the composition is more than 50°C.

In another embodiment a fiber comprises a crystallized polyetherimide composition derived from the polymerization of: (a) a dianhydride component, comprising more than 96.8 mole % of 4,4'- bisphenol A dianhydride or a chemical equivalent thereof; and (b) a diamine component comprising a diamine or a chemical equivalent thereof wherein the fiber has a Tₘ ranging from 250°C to 400°C and the difference between the Tₘ and T_{g} of the fiber is more than 50°C.

In another embodiment, a method of making a fiber, comprises extruding, through an orifice under conditions sufficient to form a fiber, a crystallizable polyetherimide composition derived from the polymerization of: (a) a dianhydride component, comprising more than 96.8 mole % of 4,4'- bisphenol A dianhydride or a chemical equivalent thereof; and (b) a diamine component comprising a diamine or a chemical equivalent thereof wherein the crystallizable polyetherimide has a Tₘ ranging from 250°C to 400°C and the difference between the Tₘ and T_{g} of the composition is more than 50°C.

In still another embodiment, an article comprises the above-described fiber.

The invention is further illustrated in the Figure, detailed description, and Examples below.

### BRIEF DESCRIPTION OF THE FIGURE

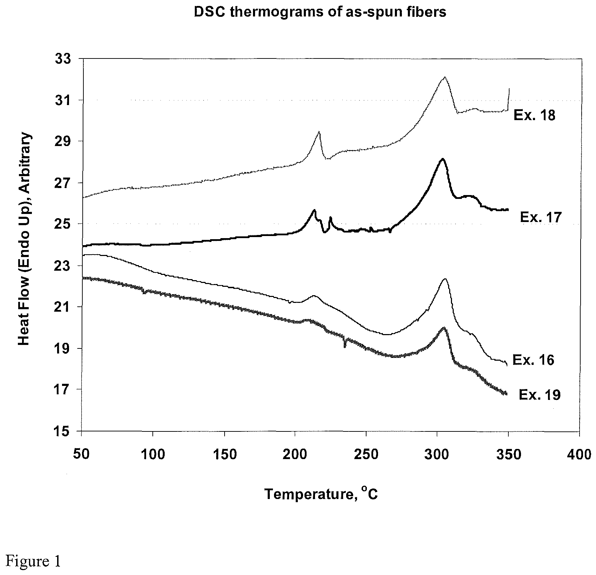

Figure 1 shows DSC thermograms of the as-spun fibers of Examples 16 to 19.

### DETAILED DESCRIPTION

The inventors hereof have unexpectedly found that crystallizable polyetherimides can be formed using specific isomers of bisphenol A dianhydride and para-phenylenediamine, after fiber spinning, drawing and/or post-spinning heat treatment. The bisphenol A dianhydride comprises greater than 96.8 mole % of 4,4'-bisphenol A dianhydride, and the composition comprises less than 5 mole% of meta-phenylenediamine. In an unexpected feature, it has been found that crystallization from the melt state occurs only under conditions high chain orientation, such as those achieved in typical fiber forming operations. Under non-oriented conditions, the 4,4'-BPADA-pPD polymers do not crystallize readily from the melt state despite their high isomer purity. The polyetherimides have been found to have excellent physical properties, in particular good tensile strength, low hot-air shrinkage, and good melt processability.

A "fiber" is a strand or filament of thermoplastic resin that is very long in comparison to its diameter.

All ASTM tests and data are from the 1991 edition of the Annual Book of ASTM Standards unless otherwise indicated.

"Glass transition temperature" (T_{g}) is the approximate midpoint of the temperature range over which the glass transition occurs. T_{g} is not obvious (like a melting point), and is detected by changes, with rising temperature, in secondary properties such as the rate of change with temperature of specific volume or electrical or mechanical properties. Moreover, the observed T_{g} can vary significantly with the specific property chosen for observation and on experimental details such as the rate of heating or electrical frequency. A reported T_{g} should therefore be viewed as an estimate. The most reliable estimates are normally obtained from the loss peak in dynamic-mechanical tests or from dilatometric data. For purposes of the present invention, the glass transition temperature was determined by the inflection of the DSC (Differential Scanning Calorimetry) trace.

"Melting temperature" (Tₘ) of the compositions was measured via DSC heat flow traces. The melting temperature refers here to the temperature corresponding to the peak of the melting endotherm in the DSC trace. In some cases, multiple melting endotherms may be observed, depending on processing history. In such cases, the term melting temperature refers to the temperature at the peak of the highest-temperature endotherm.

"Melt viscosity" is the resistance to shear in a molten resin, quantified as the quotient of shear stress divided by shear rate at any point in the flowing material. Elongational viscosity, which comes into play in the drawing of extrudates, is analogously defined. In polymers, the viscosity depends not only on temperature and, less strongly, on pressure, but also on the shear rate. For purposes of the present disclosure, melt viscosity is determined at 400°C as measured by capillary rheometry according to ASTM D3835, or by parallel plate rheometry.

As used herein the term "crystallizable" means that a fiber spun from a composition of our invention crystallizes (exhibits at least one Tₘ) and exhibits an enthalpy of melting of at least 10 joules/gram after being drawn or heat treated at a temperature ranging from 200 to 300°C for 20 minutes or less.

As used herein a "crystalline" or "semicrystalline" polymer means the polymer is fully or partially crystalline, or that there are crystalline domains of substantial size among amorphous domains in the polymer mass. For the purposes of the current disclosure, a polymer is considered crystalline or semicrystalline if it has a melting point, Tₘ and exhibits a melting endotherm. The terms "crystalline" and "semicrystalline" are used interchangeably here.

"Tensile Strength" is the maximum nominal stress sustained by a test specimen being pulled from both ends, at a specified temperature and at a specified rate of stretching. When the maximum nominal stress occurs at the Yield Point it shall be designated tensile strength at yield. When it occurs at break, it shall be designated tensile strength at break. Tensile strength of the fibers was measured according to ASTM standard D2256-97, and expressed in Pascals (N/m²) or in gram-force per denier (gpd).

The following discussion is not intended to be limiting with respect to the reactions and monomers used to form the repeating subunits of the disclosed polymer compositions. When structural units of chemical moieties are said to be "derived from" a precursor moiety, there is no implied limitation on the actual chemical reaction which can be used to produce the chemical moiety. For example when a chemical moiety such as a polyetherimide is said to have structural units "derived from" the polymerization of a dianhydride and a diamine, then any known equivalent or method could be used to prepare the polyetherimide, including reaction of a dianhydride and a diamine, or a displacement reaction between a phenoxide species and an imide bearing a displaceable group, or other known method, it only being necessary that the derived chemical moiety comprise structural units that can be represented in the stated precursor moiety.

The crystallizable polyetherimides comprise repeating structural units of formula (1) 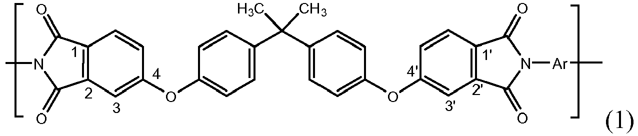 wherein Ar is a C₆₋₃₆ divalent aromatic group. In one embodiment, the C₆₋₃₆ divalent aromatic group includes heteroatoms. As shown by the labeled ring positions in repeating structural unit (1), the oxygens of a bisphenol A moiety are joined to the 4 and 4' positions of two phthalyl aromatic rings. The repeating unit (1) is therefore the 4,4'-isomer of the polyetherimide. In one embodiment, the crystallizable polyetherimides consist essentially of repeating structural units of formula (1), i.e., no other polyetherimide structural units are present that would significantly adversely affect the crystallizability properties of the polyetherimide. In another embodiment, the crystallizable polyetherimides consist of repeating structural units of formula (1), i.e. no other types of structural units are present.

In a specific embodiment, the crystallizable polyetherimides comprise repeating structural units of formula (1a) 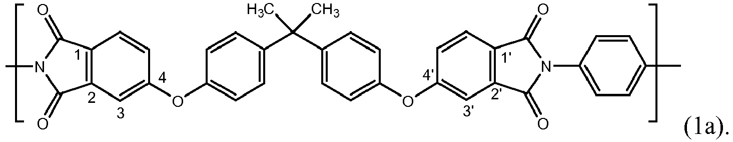 It is to be understood that the below discussion, in referring to compounds of formula (1) also specifically encompasses compounds of formula (1a).

The crystallizable polyetherimides represented by repeating unit (1) have an isomer purity of more than 96.8 mole %, more specifically more than 97 mole %, and most specifically 98 mole % or greater. In other words, the isomeric mixture in the polymer contains the 4,4'-isomer represented by repeating unit (1) in an amount greater than 96.8 mole %. These high melting, yet melt-processable, polyetherimides, when crystallized by a suitable process as described herein, also have a Tₘ of 250°C to 400°C, and a difference between Tₘ and T_{g} of more than 50°C.

Without being bound by theory, it is believed that the isomeric purity of the crystallizable polyetherimides facilitates crystallization under oriented conditions (with a high degree of polymer chain orientation), such as after fiber spinning, drawing and/or heat treatment as described herein. However, isomeric purity alone is not a sufficient predictor for crystallization properties. The choice of diamine also affects crystallizability.

In one embodiment, the crystallizable polyetherimides are derived by the polymerization of a 4,4'-BPADA component or chemical equivalent thereof, and a diamine component or chemical equivalent thereof.

As shown by the labeled ring positions in repeating structural unit (2) 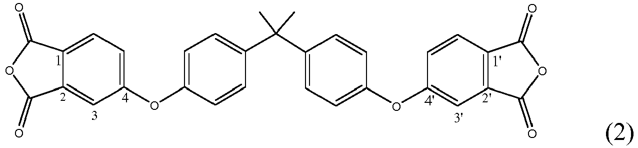 the oxygens of the bisphenol A moiety are joined to the 4 and 4' positions of two phthalyl aromatic rings. The repeating unit (2) is therefore the 4,4'-isomer of the BPADA. The isomeric mixture in the BPADA contains the 4,4'-isomer represented by structural unit (2) in an amount greater than 96.8 mole %.

Chemical equivalents of 4,4'-bisphenol A dianhydride include, for example, the corresponding carboxylic acids, C₁₋₄ alkyl or C₆₋₁₋ aryl esters, halides, amides, imides, nitriles, mixed anhydrides, and haloformates. Mixed esters, mixed amides, mixed imides, mixed ester imides, mixed ester amides, amine salts of carboxylic acid, and the like can also be used, or a combination of the foregoing functional groups.

The 4,4'-bisphenol A dianhydride (4,4'-BPADA) can be prepared by known methods. For example, a 4-nitrophthalimide or 4-nitrophthalonitrile can be reacted with the disodium salt of 4,4'-bisphenol A and the resulting bisimide or tetranitrile hydrolyzed to the tetracarboxylic acid (3) 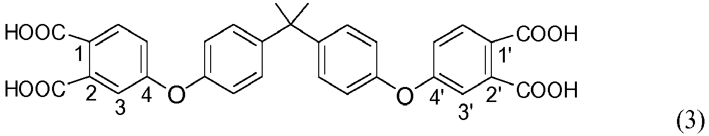 and further condensed to the dianhydride (2). Isomer impurities in the 4,4'-bisphenol A dianhydride component can, in some instances, arise from the manufacture of the monomer. For example, the 4,4'-bisphenol A dianhydride (2) can be prepared from the exchange reaction of a bis(N-methylphthalimide) of formula (4) (also referred to as BPABI) and phthalic anhydride. 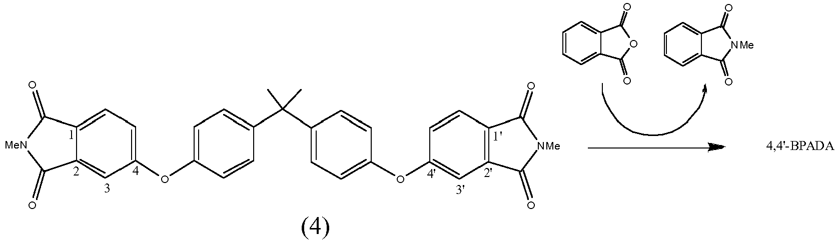 If the bisimide starting material (4) contains the 3,4'-isomer and/or the 3,3'-isomer, the 4,4'-BPADA will also contain the 3,4'-bisphenol A dianhydride (3,4'-BPADA) of formula (5) 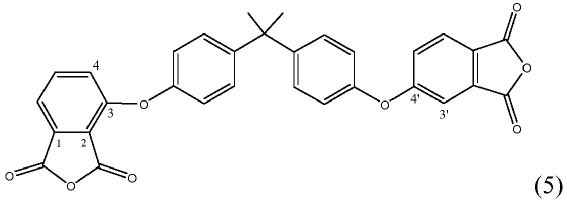 and/or the 3,3'-bisphenol A dianhydride (3,3'-BPADA) of formula (6)

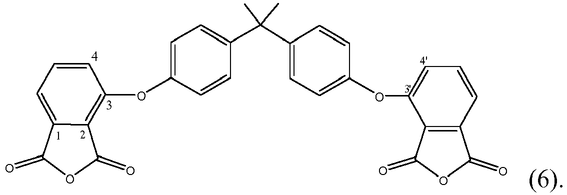

Alternatively, or in addition, if the exchange reaction does not go to completion, the 4,4'-BPADA component can contain some monoimide of formula (7) 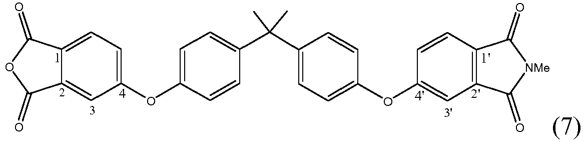 and/or the starting bisimide (4).

The mole ratios of the 4,4'-isomer, 3,4'-isomer and 3,3'-isomer in the 4,4'-bisphenol A derived component, in particular the dianhydride, or the presence of other impurities such as monoimide (7) and/or starting bisimide (4) can readily be determined by various methods such as nuclear magnetic resonance (NMR) and/or high pressure liquid chromatography (HPLC). The isomers and other impurities can similarly be separated and purified by any of various known methods.

The diamine component for reaction with the dianhydride (2) can include, for example, 2,4-diaminotoluene; 2,6-diaminotoluene; m-xylylenediamine; p-xylylenediamine; benzidine; 3,3'-dimethylbenzidine; 3,3'-dimethoxybenzidine; 1,5-diaminonaphthalene; bis(4-aminophenyl)methane; bis(4-aminophenyl)propane; bis(4-aminophenyl)sulfide;; bis(4-aminophenyl)ether; 4,4'-diaminodiphenylpropane; 4,4'-diaminodiphenylmethane(4,4'-methylenedianiline); 4,4'-diaminodiphenylsulfide; 4,4'-diaminodiphenylsulfone; 4,4'-diaminodiphenylether(4,4'-oxydianiline); 1,5-diaminonaphthalene; 3,3'dimethylbenzidine; 3-methylheptamethylenediamine; 4,4-dimethylheptamethylenediamine; 2,2',3,3'-tetrahydro-3,3,3',3'-tetramethyl-1,1'-spirobi[1H-indene]-6,6'-diamine;3,3',4,4'-tetrahydro-4,4,4',4'-tetramethyl-2,2'-spirobi[2H-1-benzopyran]-7,7'-diamine; 1,1'-bis[1-amino-2-methyl-4-phenyl]cyclohexane, 4,3'-diaminodiphenylether; 1,3-bis(4-aminophenoxy)benzene; 4,4'-bis(4-aminophenoxy)biphenyl; and isomers thereof, as well as combinations comprising at least one of the foregoing diamines. In one embodiment, the diamine component comprises p-phenylenediamine (pPD). In another embodiment, the diamine component consists essentially of p-phenylenediamine. In another embodiment, the diamine component consists of p-phenylenediamine, i.e., no other diamine is present.

When the diamine component is p-phenylenediamine (pPD), it has less than 5 mole % of meta-phenylenediamine (mPD), specifically less than 2 mole %, more specifically less than 1 mole %. In one embodiment, the diamine component is substantially free of meta-phenylenediamine. The term "substantially free" means that the meta-phenylenediamine is present in an amount of less than 0.5 mole % of the total moles of amine. Chemical equivalents of diamines include the corresponding salts or isocyanates.

The crystallizable polyetherimides can be prepared by solution polymerization (e.g., at 125 to 200°C) or melt polymerization (e.g., at 200 to 350°C). The molar ratio of the diamine component to the 4,4'-dianhydride-monomer is usually between about 0.90:1 and about 1.1:1.

The use of end-capping agents such as phthalic anhydride (PA) and aniline can be desirable in certain instances in order to avoid an undesirably high melt viscosity. Such end-capping agents, if present, typically comprise about 0.2 to 10 mole percent of the total monomer.

Endcapping agents can include monoanhydrides of the general structure 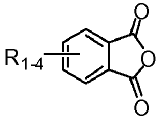 having 1 to 4 "R" substituents in any combination, including C₁₋₃₆ alkyl, C₁₋₃₆ alkoxy, aromatic, halo, nitro, sulfone, thioether, ester, acid, sulfonate, carbonyl, ketone, or hydrogen. Specific examples include phthalic anhydride, 3-chlorophthalic anhydride, 4-chlorophthalic anhydride, 3-fluorophthalic anhydride, 4-fluorophthalic anhydride, 3-nitrophthalic anhydride, 4-nitrophthalic anhydride. Endcapping agents can also include primary amine species of the general structure H₂N-R wherein "R" is C₁₋₃₆ alkyl, alkoxy, aromatic radicals such as phenyl, sulfone, ketone, carboxylic acid and their salts, aromatic acids and their salts, and thioethers. Specific examples include aniline, octylamine, hexyl amine, ethanolamine, and taurine.

The crystallizable polyetherimides can also be prepared in a two-stage process in which the first stage is the formation of a polyamic acid and the second stage is the imidization of the polyamic acid. The first stage is typically carried out at a temperature form 25°C to 180°C in a solvent which can be a hydroxyaromatic solvent, but is most often a polar organic compound such as diethylene glycol dimethyl ether, anisole, veratrole, nitrobenzene, cyanobenzene, diethylether, chlorobenzene, dichlorobenzene, trichlorobenzene, or other halogenated aromatics or a dipolar aprotic solvent such as dimethylformamide, dimethylacetamide, dimethyl sulfoxide, m-cresol or N-methylpyrrolidone. In the second stage, the polyamic acid is converted to the polyimide, typically by heating in the range of from 180° to 375°C and in the substantial absence of solvents.

The crystallizable polyetherimides are highly resistant to solvent dissolution. In general, they are soluble in substantial proportions only in hydroxyaromatic solvents such as m-cresol, hexafluoroisopropanol, and o-chlorophenol, and frequently only at elevated temperatures. The Tₘ value, as previously noted, is greater than 270°C, and in particular greater than 280°C.

Compositions comprising the crystallizable polyetherimides can also include additives such as stabilizers, plasticizers, and pigments or dyes, in conventional amounts before or during the fiber spinning process to control various properties of the fibers.

Other additives that can be added to the melt processed 4,4'-polymer include antioxidants such as phosphites, phosphonites, and hindered phenols. Phosphorus containing stabilizers, including phosphoric and phosphorous acid, triaryl phosphite and aryl phosphonates, are of note as useful additives. Difunctional phosphorus containing compounds can also be employed. Stabilizers with a molecular weight of greater than or equal to 300 Daltons are particularly useful. In other instances phosphorus containing stabilizers with a molecular weight of greater than or equal to 500 Daltons are useful. Phosphorus containing stabilizers can be present in the composition at 0.05-0.5% by weight of the formulation. Light stabilizers and UV absorbers can also be used.

The crystallizable polyetherimides can be blended with the aforementioned components by a variety of methods involving intimate admixing of the materials with any additional additives desired in the formulation. Suitable procedures include melt blending and solution blending. Illustrative examples of equipment used in melt processing methods include co-rotating and counter-rotating extruders, single screw extruders, co-kneaders, disc-pack processors, and various other types of extrusion equipment.

The additives can be combined in a number of ways, either in a separate compounding step prior to actual melt-spinning of the fibers, or during the fiber spinning process itself. Both the separate compounding process and the fiber spinning process can be carried out using techniques and equipment well known to those of ordinary skill in the arts of polymer compounding and fiber melt-spinning.

To achieve the full improvement in fiber tensile strength and resistance to hot-air shrinkage, a method of forming the fiber comprises extruding the molten polyetherimide through an orifice under conditions sufficient to form a fiber, and orienting the polymer sufficiently during the spinning or an optional drawing process, which in some cases can induce partial crystallization. The resulting fiber, which has a high degree of polymer chain orientation, can undergo further heat treatment to induce or increase crystallinity and improve dimensional stability under exposure to high temperatures. The crystallized fiber is then ready for use, for example in the manufacture of a thread or yarn. The thread or yarn can be used in a process of weaving of a fabric, forming a felt, or in a wide variety of other textiles.

Specifically, a method of making a fiber comprises extruding, through an orifice under conditions sufficient to form at least one fiber, a crystallizable polyetherimide composition derived from the polymerization of: (a) a dianhydride component, comprising more than 96.8 mole % of 4,4'- bisphenol A dianhydride or a chemical equivalent thereof; and (b) a diamine component comprising a diamine or a chemical equivalent thereof, wherein the crystallizable polyetherimide has a Tₘ from 250°C to 400°C and the difference between the Tₘ and T_{g} of the composition is 50°C or more, specifically 50 to 150°C, even more specifically 50 to 100°C. In one embodiment, a method of manufacture of a fabric comprises combining a plurality of the foregoing fibers into a yarn; and then weaving the fibers to form the fabric.

The optimum draw ratio will vary with the exact nature of polymer, the drawing temperature, strain rate, initial diameter and the presence of any additives. The draw ratio is defined as the ratio of the final length to the original length per unit weight of the yarn resulting from the drawing process. Draw ratios of 1.05 to 10 or even 20 are suitable, although in this case, a draw ratio of 1.1 to 6 is more suitable.

Fiber drawing can be achieved by any standard methods known in the art. The fiber can be drawn between two godet rolls, or sets of rolls, or over a draw pin or pins, or hot plates, or a mixture of the above. The drawing can be done in single or multiple stages. The fiber is usually heated to a temperature above the glass transition temperature prior to, or during, drawing to facilitate chain motion and orientation. The heating can be carried out via heating of godet rolls, plates, pins or other means such as use of a heated chamber; hot gas such as steam, or hot liquid, can also be used.

In general fibers comprising the 4,4'-BPADA-based polyetherimides described herein require a heat treatment (preferably under constraint) after spinning and / or drawing in order to achieve the proper level of crystallization for good tensile strength and resistance to hot-air shrinkage. The time/temperature conditions of the heat treatment can range from 0 (that is, the fiber may be crystalline as-spun), to 20 minutes at 200°C to 300°C, depending on the level of isomer purity in the polymer, the degree of polymer chain orientation in the fiber and the temperature of heat-treatment.

In another embodiment, at optimal conditions of isomer purity and orientation, fibers containing the 4,4'-BPADA-based polyetherimides described herein do not require a heat treatment after being subjected to spinning and optionally, drawing steps.

The high isomeric purity of the 4,4'-isomer in the polymer facilitates crystallization of the crystallizable polyetherimides under conditions of high chain orientation, such as that achieved in typical fiber forming operations. Under non-oriented conditions, the crystallizable polyetherimides do not crystallize readily from the melt state despite their high isomer purity alone; it is important to have a combination of the right monomer type, purity, and high orientation in order to achieve crystallinity.

The crystallizable polyetherimides are of particular utility because they are melt processible at temperatures commonly used in the industry. For example, the crystallizable polyetherimides can have a viscosity of less than 7,000 poise, specifically 1,000 to 5,000 poise at a temperature of 400°C or less, specifically at temperature between 300°C and 400°C.

The crystallizable polyetherimides provide fibers having several advantageous properties. In one embodiment, the fibers have a tensile strength of from 2 to 20 grams per denier.

The fibers can further have very low shrinkage when exposed to heat, such as hot air or liquid. For example, the fibers can have a hot-air shrinkage of less than or equal to 20% when exposed to 260°C air for 10 minutes.

The fibers produced as described herein can be of a range of fineness, or deniers per filament (dpf) depending on the ultimate use of the fibers; for example low dpf for textile use, higher dpf for use in industrial applications. The cross-sectional shape of the fibers can also be any of a wide range of possible shapes, including round, delta, trilobal, tetralobal, grooved, or irregular.

The product fibers can be subjected to any of the known downstream processes normally carried out on melt-spun fibers, including crimping, bulking, twisting and the like, to produce yarns or staple fibers, suitable for incorporation into a variety of articles comprising a plurality of fibers of manufacture, such as woven and non-woven fabrics, felts and the like.

The fibers can be used in a wide variety of applications, for example as filter media, and in apparel, safety, protective, and industrial textiles, upholstery, carpets, and reinforcements in tires and other composites. A crystallizable polyetherimide as described above also advantageously enables melt processing, particularly at temperatures commonly used in the industry. Further, enhanced crystallizability facilitates higher productivity for the fiber manufacturer. As discussed above, the term "crystallizable," as used in this application, means that a fiber spun from a composition of our invention crystallizes (exhibits at least one Tₘ) and exhibits an enthalpy of melting of at least 10 joules/gram after being drawn or annealed at a temperature ranging from 200 to 300°C for 20 minutes or less. In another embodiment, a fiber spun from a composition of our invention can crystallize within 10 minutes or less. In another embodiment, a fiber spun from a composition of our invention can crystallize within 5 minutes or less. In another embodiment, a fiber spun from a composition of our invention can crystallize within 4, 3, 2, or 1 minute(s) or less.

The features and advantages of the crystallizable polyetherimides are further illustrated by the following Examples.

### EXAMPLES

**Table 1.**

| Component | Description | Source / Vendor |
|---|---|---|
| mPD | meta-Phenylenediamine | Dupont |
| pPD* | para-Phenylenediamine | Dupont |
| o-DCB | ortho-Dichlorobenzene | - |
| m-cresol | meta-Cresol | Aldrich |
| PA | Phthalic anhydride | Aldrich |
| BPADA | Bisphenol-A dianhydride | SABIC Innovative Plastics |
| 100% 4,4'-BPADA | Isomerically pure 4,4'-BPADA with 0% 3,4'- or 3,3'-isomers | J.T. Baker |
| 99% 4,4'-BPADA | 4,4'-BPADA with about 1% 3,4'- and 3,3'-isomers | SABIC Innovative Plastics |
| 98% 4,4'-BPADA | 4,4'-BPADA with about 2% 3,4'- and 3,3'-isomers | SABIC Innovative Plastics |
| BPADA-pPD | 96.3% isomerically pure 4,4'-BPADA | GE Plastics, commercial sale |
| 99.3% 4,4'-BPADA | 4,4'-BPADA with less than 1% 3,4'- and 3,3'-isomers (about 0.7% as measured by HPLC) | Large-scale recrystallization of lower purity (93+%) 4,4'-BPADA |
| 99.45 % 4,4'-BPADA | 4,4'-BPADA with less than 1% 3,4'- and 3,3'-isomers (about 0.5% as measured by HPLC). | Large-scale recrystallization of lower purity (93+%) 4,4' BPADA |
| 99.9% % 4,4'-BPADA | Purer 4,4'-BPADA with less than 1% 3,4'- and 3,3'-isomers (about 0.1% as measured by HPLC). | Large-scale recrystallization of 99+% 4,4' BPADA |

| | | |
|---|---|---|
| * per manufacturer's certificate of analysis, contains less than 5.0 mole % (less than 1.0 mole %) of meta-phenylenediamine. | | |

### Techniques and Procedures

### Procedure 1a. BPADA isomer purity by NMR.

Isomer purity refers to the fraction (mole %) of 4,4'- vs. 3,4'- and 3,3'-linkages in the BPADA portion of the polyetherimide molecules described herein. Purity was measured using NMR.

All of the BPADA monomer samples were melted above 200°C under vacuum overnight before analysis by nuclear magnetic resonance (NMR). This heating step efficiently reduced the residual diacid and tetraacid hydrolysis products by reforming the anhydride or dianhydride. This is confirmed by the improved solubility in CD₂Cl₂ and the reduction in haziness of the solution. Additionally, ¹³C NMR confirmed the absence of any residual acid in the low field region. All of the BPADA samples were dissolved in CD₂Cl₂. In each case, 200 mg of BPADA monomer was dissolved in about 3.5 mL of solvent, enough to fill a 10-mm NMR tube to a column height of 50 mm. The spectra were acquired on a Varian Inova NMR spectrometer operating at 150.8 MHz for ¹³C and 599.8 MHz for ¹H. A sweep width of 36.2 KHz and 64 k data points were used, resulting in an acquisition time of 1.8 seconds. The pulse delay was adjusted to make the total cycle time 4 seconds. All spectra were acquired with broadband Waltz-16 proton decoupling (this can result in decoupling sidebands in some high dynamic range spectra). In number, 16,000 transients were collected, making a total acquisition time of about 17.5 hours. Data was processed with an in-house developed processing tool, using 2 Hz line broadening, automatic phase adjustment and a tenth degree polynomial baseline correction.

To calculate the purities of the BPADA monomers, integrations in the carbonyl region were performed. The carbonyl peak at 163.9 ppm was chosen for calculation of the 3,4' dianhydride versus the major dianhydride peak at 162.8 ppm (set to 100). The peaks at 168.4 ppm and 168.3 ppm (both imide carbonyls, divided by two) were integrated against the peak at 162.8 ppm also, one of the carbonyl peaks for the 4,4'-BPADA.

### Procedure 1b. BPADA isomer purity by HPLC

A sample of purified BPADA was melted in an aluminum pan (surface temperature of 300°C) for 15 minutes. A 20 mg (±3 mg) sample of the fused material was dissolved in 50 mL of a mixture of methylene chloride, tetrahydrofuran, iso-octane, and glacial acetic acid (43.74 vol%, 15.25 vol%, 41.00 vol%, 0.01 vol%, respectively). Sonication for 15 minutes was used to speed the dissolution of the sample. The solution was then analyzed by high pressure liquid chromatography (HPLC) to determine the amount of 4,4-BPADA, 3,4-BPADA, and 3,3-BPADA isomers present. The HPLC protocol used a Zorbax CN column (4.6 mm by 25 cm) at 30°C, a 15 uL injection, UV detection at 254 nm, with a 1 mL/min eluent flow, and isocratic solvent mixture composed of 72.5 vol% of iso-octane and 27.5% tetrahydrofuran. The three isomers separated and the areas of the peaks were used to determine the percent of each isomer.

### Procedure 2. Polymer synthesis: m-cresol solvent.

The polymerization of 4,4'-BPADA with mPD or pPD was carried out in m-cresol solvent under nitrogen atmosphere. In a typical procedure, 50 grams of dianhydride, 10.9 grams diamine, and 1.44 grams phthalic anhydride endcapper were weighed to a round bottom flask equipped with a Dean-Stark trap, a mechanical stirrer, a nitrogen inlet and a thermocouple. m-Cresol was then added to make a 20% solids mixture by weight. The reaction mixture was heated at 200°C and the water formed was distilled as an azeotrope with m-cresol. The reaction was monitored using GPC measurements of the molecular weights of the aliquots. The heating was stopped when the polymer molecular weight became constant (about 3 hours). The reaction mixture was cooled down to room temperature with vigorous stirring. Then about 500 mL of methanol was added in batches to the reaction flask to precipitate the obtained polymer as a light yellow powder. Then the obtained mixture of polymer, m-cresol, and methanol was poured into a lab blender and mixed vigorously for about 10 min. The polymer was then filtered out as fine yellowish powder and then rinsed multiple times with methanol before being dried at 200°C under vacuum for 10 hours.

The amounts of anhydride, amine, and end-capping agent were adjusted for each composition depending on the size of the batch, the purity of the monomers used, and the target molecular weight. The above amounts are representative for a specific synthesis with 100% pure 4,4'-BPADA, for an approximately 60 g batch size, and a target degree of polymerization of 20.

### Procedure 3a. Polymer synthesis: o-DCB solvent, small scale.

In a typical procedure, a 500 mL 3-neck round bottom flask equipped with an overhead stirrer, a nitrogen purge, and a Dean-Stark trap was charged with 62.1434g (0.1198 mols) of bisphenol A dianhydride (BPADA). Additionally charged to the flask were 11.8234 g (0.1093 mols) of p-phenylene diamine, 1.6326 g (0.0175 mols) of aniline, and 125 mL of o-dichlorobenzene (o-DCB). The molar ratios and amounts of dianhydride, diamine, and endcapper were adjusted for each composition according to the purity of the monomers, the batch size, and the target molecular weight. The above amounts are representative for a specific synthesis with 100% pure 4,4'-BPADA and a target degree of polymerization of 20.

With vigorous stirring, the reaction was heated first to 120°C with an external temperature controlled oil bath and held for 30 min. The temperature was then increased to 165°C and held for 30 min. Finally the temperature was increased to 185°C and held for the remainder of the reaction. After 1 hour at 185°C, a small sample was obtained and the solvent removed using a 380°C hot-block with a nitrogen purge. The molten polymer sample was then cooled to room temperature and then pressed into a film. The film was analyzed by FTIR and the percent remaining amine and anhydride was calculated from the IR spectrum. The analysis showed 0.370 mole % remaining amine and 0.224 mole % anhydride. The difference in stoichiometry was corrected by adding 0.0969 g of BPADA. The reaction was heated for 1 additional hour and then allowed to cool to room temperature. The polymeric precipitate was collected by vacuum filtration and then dried overnight at 180°C. After drying, the residual solvent content in the polymer was 123 ppm as determined by gas chromatography. The reaction was then finished by melt-processing the polymer powder on a high temperature mechanically stirred metal bowl (Haake HBI System 90) at a temperature of 330°C and 50 rpm for 10 min.

### Procedure 3b. Polymer synthesis: o-DCB solvent, larger scale.

1788 L of distilled o-DCB was added to an agitated vessel at room temperature. The vessel was then heated to 170°C and maintained at that temperature for 3 hrs, before cooling it down to less than 50°C. 681.8 Kg of bisphenol-A-dianhydride (BPADA with 98.5 mol% 4,4'- dianhydride linkages) and 12.27 Kg of aniline were then added to the vessel. The vapor space in the vessel was then swept using nitrogen for 15 min. 133.2 Kg of p-phenylene diamine (pPD) was then charged to the vessel, and the vessel was heated to 170°C after the pPD charge. The temperature was held at 170°C for 1 hr, after which a sample was collected and analyzed for stoichiometry. After a series of stoichiometry corrections by addition of pPD, the target stoichiometry of 0.3 mol % anhydride excess was reached. The contents of the vessel were then transferred to another agitated vessel, where it was cooled down to less than 50°C. After cooling, the contents were fed in batch mode to a centrifuge operating at 800 rpm. The solids from the centrifuge were then transferred to a rotary vacuum dryer in batch mode to further reduce the o-DCB content in the solids. The solids from the dryer were then fed to a counter-rotating non-intermeshing devolatilizing twin-screw extruder to yield molten polymer strands, which were cooled in a water bath and pelletized.

The amounts of BPADA, pPD, aniline and solvent were adjusted for each batch depending on the isomer purity of the BPADA, the batch size and target molecular weight.

### Procedure 4. Molecular weight determination by GPC.

Molecular weights were determined by a Perkin-Elmer Series 200 Gel permeation chromatography (GPC) system equipped with an autosampler and a UV-Visible light detector. Chloroform was used as the mobile phase. The GPC system was calibrated using polystyrene standards. The data was collected and processed using a Perkin-Elmer Totalchrom Workstation. The polymer powders were dissolved in a 1:1 v/v hexafluoro-isopropanol/chloroform solvent mixture (10 mg polymer / 1 mL solvent mixture), then diluted with 9 mL chloroform to achieve 1 mg polymer / 1 mL solvent concentration.

### Procedure 5. Viscosity determination by parallel plate rheometry.

Dynamic viscosities of the polymer melts were obtained using a Rheometrics RDAII parallel plate rheometer. The polymer powder or pellets were dried at least at 150°C overnight under vacuum, then molded into 25-mm disks by compression molding in a 400°C heated mold. The disks were cooled and dried again prior to analysis. Viscosities were measured using 25-mm parallel plates, at a 2 mm gap, at a frequency of 0.63 rad/s and a 20% strain. Complex viscosity η* (Poise) was reported.

### Procedure 6. Viscosity determination by capillary rheology.

Viscosities at high shear rates were determined using a Goettfert 2002 capillary rheometer. The rheometer was equipped with a 1000 bar transducer and a 1 mm diameter capillary having a 30/1 L/D. A range of shear rates from 10 - 10,000 sec⁻¹was covered in each run. The measurements were made at 400°C unless specified otherwise. Neither the Rabinowitch corrections nor the end pressure loss corrections were made to the data, so the results are reported as apparent viscosity and apparent shear rate. Apparent viscosities at 400°C under a 1000s⁻¹ apparent shear rate are reported here.

### Procedure 7. Extrusion - DACA microcompounder.

Fiber extrusion on a small scale (using about 20g of polymer) was performed using a DACA microcompounder, which is a vertically configured twin-screw extruder, with a choice of dies at the exit. The extruder has a barrel capacity of 4.6 mL and is capable of a maximum temperature of 400°C. The screw speed / RPM and therefore throughput could be controlled from 5 rpm to 650 rpm. According to the manufacturer, about 25 revolutions are needed for the polymer melt to reach from feeder to the exit.

All polymers were dried in a vacuum oven at least at 150°C overnight prior to extrusion. The dry polymer powder was fed into the extruder via a small hopper. Throughput was controlled via the screw speed, which was typically set at 5 rpm. The barrel / melt temperature was varied between 370°C to 400°C. Actual extrusion temperatures are reported in each example. While the screw rpm nominally controlled the throughput, actual throughput or flow rate (g/min) of the extrudate may have varied due to other factors such as the bulk density of the powder being fed into the hopper, the temperature and therefore the melt density of the polymer, and periodic variations due to the rotation of the screw.

The die used for this work was a 0.5 mm capillary. The strand exiting the die horizontally was cooled in ambient air (no controlled quench) and taken up on a godet roll that was 8.8 cm in diameter. The speed of the godet could be varied between 40 and 5000 rpm (i.e. 11 - 1380m/min). The godet was placed at a distance of about 100 cm from the die exit.

### Procedure 8. Extrusion - Killion extruder.

For larger scale extrusion, a 19 mm Killion single screw extruder having a 20/1 L/D screw was used. The extruder was fitted with a Loss-in-Weight feeder that meters the polymer flow into the extruder. The molten polymer from the extruder was then fed downstream through a Zenith melt pump to meter the flow, and then to a spinneret via a 90° flow redirecting adapter. The melt pump had a capacity of 1.8 mL/rev (about 1 lb/hr or about 450g/hr at 4 rpm) and was driven by a 1/8th hp (93W) DC drive motor. The spinneret was a 6-hole die with 0.7 mm holes (L/D of 5).

The strand exiting the die was passed over a frictionless wheel placed about 100 cm from the die exit, and redirected to a godet/denier roll and finally to a Leesona tension-compensated winder. The speed of the godet could be varied between 40 and 5000 rpm (11 - 1380 m/min).

### Procedure 9. Fiber diameter / linear density measurement.

Since single filaments were typically extruded, fiber linear density was measured via the diameter. The diameter was measured using a Mitutoyo digital micrometer with a 1 micrometer resolution. The micrometer readings were calibrated against optical microscopy measurements to ensure accuracy. Typically, 2-3 diameter readings were taken and averaged.

### Procedure 10. Tensile testing.

Tensile properties of single filaments and yarns were tested according to ASTM D2256-97, with the following parameters / changes. A gauge length of 2.5 cm was used for single-filament testing and 17 cm for multifilament yarn testing. For single-filament testing, pneumatic flat-face grips were used. To prevent fiber slippage, fine-grained sandpaper was adhered to the grip faces. The filament was mounted between two strips of adhesive paper tape (masking tape) mounted on a frame 1 inch (2.54 cm) apart. The strips were then covered with another layer of adhesive tape to sandwich the fiber. The tape assembly was then mounted on the grips with minimal pre-tension.

For tensile testing of multifilament yarns, pneumatic yarn grips were used; these grips had a capstan design that evenly distributes the gripping force over the surface of a curved half capstan through friction.

A testing rate of 5 cm/min was used. Typically, at least 4 samples were tested per measurement.

### Procedure 11. Hot-air shrinkage.

Hot-air shrinkage was measured by suspending a 20 cm length of filament or yarn freely via a metal clip, in a natural-convection oven preheated to maintain the desired temperature. The sample was placed in the oven for 10 min and removed, then cooled and its length measured. Hot-air shrinkage was calculated as the difference between the initial and final lengths, normalized by the initial length. At least 3 samples were tested per measurement.

### Procedure 12. Tₘ, T_{g}, and ΔHₘ measurements via DSC.

T_{g}, Tₘ, and melting enthalpies were determined using a Perkin Elmer DSC-7 Differential Scanning Calorimeter. Data from first heating step (room temperature to 400°C at 20°C/min scanning rate) was used. Melting enthalpies were calculated from peak areas after baseline subtraction. T_{g} was taken as the midpoint of the transition in the heat flow vs. temperature trace. Tₘ was chosen to be the temperature at the peak of the melting endotherm. In cases where multiple melting endotherms were observed, the reported Tₘ was the temperature at the peak of the highest-temperature endotherm.

### Procedure 13. Heat-treatment with constraint.

For annealing / heat-treatment, the filament or yarn was wrapped around an aluminum tube or aluminum frame and secured in place via high-temperature (polyimide) tape. The fiber thus constrained against shrinkage was placed with the tube or frame in a natural convection oven preheated to the desired annealing temperature, for the specified length of time.

### Procedure 14. Preparation of BPADA with enriched 4'4- linkages using high purity 4-nitrophthalimide (4-NPI).

4-NPI containing varying amounts of 3-NPI was obtained from the mixed acid nitration of N-methylphthalimide (PI), equation 1.

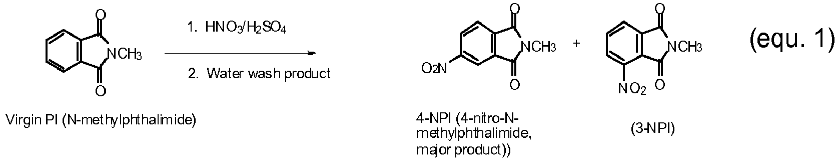

The PI was nitrated with 1.3 mole equivalents of nitric acid in 98% sulfuric acid. The reaction mixture was diluted in water and the NPI precipitated from solution. The precipitated material was filtered and then washed with varying amounts of water on the filter. The water washing of the cake selectively removes the 3-NPI from the 4-NPI wet cake. Extensive water washing results in a 4-NPI cake containing as little as 0.1% 3-NPI (with respect to the total of NPI present). Material was obtained that contained about 0.5% 3-NPI, about 0.8% 3-NPI, and about 1.85% 3-NPI. The normal amount of 3-NPI in 4-NPI from the mixed acid nitration is about 4.0%.

The 4-NPI containing varying amounts of 3-NPI was reacted BPA di-alkali metal salt to afford the corresponding bisimide (equation 2).

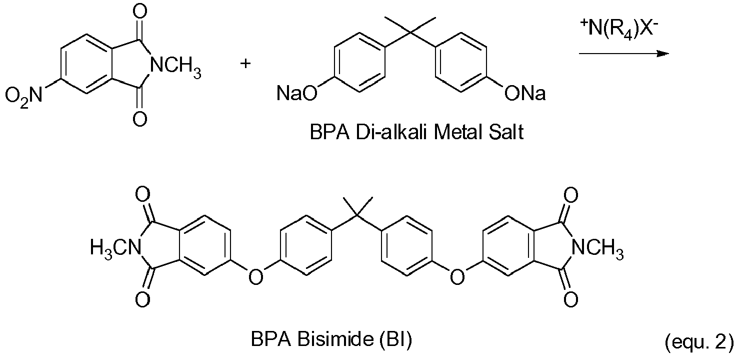

Both 3- and 4-NPI react with BPA di-alkali metal salt in a solvent in the presence of a phase transfer catalyst to afford a bisimide with the statistical amount of 3-ether linkages dictated by the amount of 3-NPI present in the 4-NPI (these isomers are not shown in equation 3).

The bisimide is then reacted with phthalic anhydride in water in the presence of base at elevated temperature and pressure to ultimately afford BPADA (equ. 3).

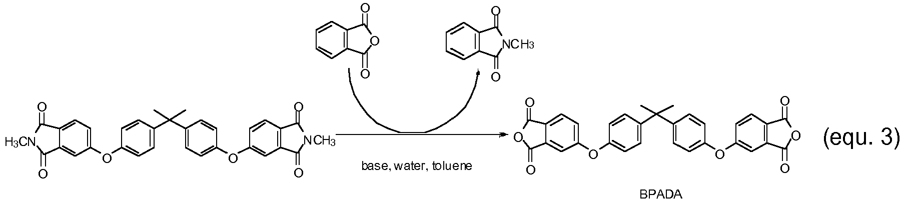

The ether linkages are stable in the exchange reaction. Therefore, the isomer ratio of 4-NPI/3-NPI dictates the isomer ratio of the ether linkages in the BPADA.

4-NPI can be produced by mixed acid nitration of N-methylphthalimide that contains 0.1 to 4.0% of 3-NPI. The use of 4-NPI that contains varying amounts of 3-NPI affords BPADA with the isomer purity shown in Table 2. In particular, Table 2 shows the isomer purity of BPADA resulting from 4-NPI containing various amounts of 3-NPI.

**Table 2.**

| %3NPI in 4-NPI | %4,4-DA | %3,4-DA | %3,3-DA |
|---|---|---|---|
| | | | |
| 3.5 | 93.12 | 6.76 | 0.12 |
| 3 | 94.09 | 5.82 | 0.09 |
| 2.5 | 95.06 | 4.88 | 0.06 |
| 2 | 96.04 | 3.92 | 0.04 |
| 1.87 | 96.29 | 3.67 | 0.03 |
| 1.5 | 97.02 | 2.96 | 0.02 |
| 1 | 98.01 | 1.98 | 0.01 |
| 0.5 | 99.00 | 1.00 | 0.00 |

In this manner then, 4-NPI containing 1.85% of 3-NPI ultimately afforded BPADA containing about 96.3% of 4,4-BPADA. 4-NPI containing about 0.8% of 3-NPI afforded BPADA containing about 98.5% of 4,4-BPADA. 4-NPI containing 0.5% of 3-NPI afforded BPADA containing about 99.0% of 4,4-BPADA. The BPADA of various isomer purity can be polymerized with pPD.

Procedure 15. Preparation of BPADA with enriched 4-4'- linkages by the recrystallization of BPADA containing 98.5% 4,4'-BPADA.

A 100-gallon stainless steel reactor equipped with a turbine blade agitator, reflux condenser and thermocouple probe was inserted with nitrogen and charged with 580 pounds of methyl isobutyl ketone (MIBK, Brenntag Northeast, Inc Product code 662675, Lot # 242349B). With moderate stirring 140.8 pounds of BPADA that was 97.7% 4,4'-BPADA was charged and the slurry was slowly heated by circulating hot oil through the reactor jacket (oil set point 124°C). After a short time at 116-117°C, at gentle reflux, all of the BPADA was dissolved. The solution was stirred at 117°C for 30 minutes before cooling slowly over night, while stirring, to a temperature of 48°C. The slurry was further cooled to 31°C and held for two hours. The slurry was dropped to a 40-inch basket filter fitted with a 5-micron polypropylene filter bag thus isolating the product. The cake was spun out on high speed and then washed on the filter with 60 pounds of 25°C MIBK and again spun out on high speed. The cake was washed with a second 60-pound portion of MIBK as described above. The isomer purity of this material was 99.75% 4,4-BPADA.

The wet cake from above (133.6 pounds) was returned to the reactor containing 545 pounds of fresh MIBK. Slow heating to 117°C resulted in complete dissolution of the wet cake DA. The mixture was gently refluxed and then slowly cooled overnight. The main chiller was used to cool to 22°C where the slurry was held for 90 minutes before isolating the BPADA via basket filtration and washing with two 60 pound portions of fresh MIBK as described on the first isolation above.

The wet cake from the second recrystallization (124.3 pounds) was transferred to a 15 cubic foot vacuum tumble dryer and dried under vacuum while tumbling at room temperature for 18 hours followed by 50°C for 24 hours and finally 85°C for 20 hours to yield 115 pounds of BPADA, 81.6 % of the original 140.8 pounds. This material was essentially 100% 4,4-BPADA.

This procedure was repeated to afford dry BPADA of 99.75% 4,4-isomer purity and 100% 4,4-isomer purity.

A mixture of 237 pounds of BPADA with 99.75% 4,4-isomer purity and 136.7 pounds of BPADA with 97.7% 4,4-isomer purity was also prepared. This material contained BPADA with an overall 4,4-isomer purity of 99.0%.

### Procedure 16. Isomeric purity of BPADA in the polymer by NMR.

Procedure 1 described the measurement of isomer purity in the BPADA monomer. This procedure 16 describes the isomeric purity of BPADA in the polymer, in particular the fraction (mole %) of 4,4'- vs. 3,4'- and 3,3'- linkages in the BPADA portion of the polyetherimides described herein.

To determine isomeric purity of BPADA in the polymer, approximately 100 mg of the pellets was dissolved in 1 mL of a 1:1 mixture of HFIP-D and CDCl₃, and then diluted with 3 mL of CDCl₃. ¹³C NMR spectra were obtained on a Varian INOVA or NMRS spectrometer operating at 150.8 ppm for ¹³C. Acquisition parameters included a 36.8 kHz spectral width and 64k data points resulting in a 1.8s acquisition time. A pulsed delay of 1.2s and a flip angle of 45 were used. Broadband proton decoupling was carried out using the Waltz-16 pulse sequence. Approximately 30k scans were acquired over 24 hrs in blocks of 64. Even though the spectra are not strictly quantitative, the effects of NOE can be avoided by comparing only quaternary carbons (at 164.7 ppm and 152.5 ppm for the 4-isomer, and at 156.1 ppm, 151.9 ppm and 137.2 ppm for the 3-isomer).

### Procedure 17. Large-scale preparation of BPADA with enriched 4-ether linkages by the recrystallization of BPADA from o-DCB.

The recrystallization process was scaled up to a 1500-gallon vessel. BPADA (1500 to 1700 lb) of about 93.0% to 99.0 4,4-isomer purity was dissolved into distilled o-DCB to 25% solids, with mixing under nitrogen. The material was heated to 180°C to remove water and ring close di-acids, and then the material was cooled to about 40°C over 17-20 hrs to afford a slurry. The slurry was fed to a centrifuge in 300 lb (dry weight) slugs (3 to 4 hour spin at 700-900 rpm). The centrate was on the order of 5% solids. The cake (about 90% solids) was then dropped to a dryer, and dried in batches of the same size (using 25 psig steam, 120°C, 200 mm Hg, 3 to 4 hours) to afford purified product as shown in Table 3.

The material was transferred to super sacks. The overall yield of purified BPADA was 70 to 85% per recrystallization. The recrystallized material was about 99.0 to 99.9% of the 4,4-isomer. Generally, recrystallization of material with a greater than 97% 4,4-isomer purity resulted in a product of greater than 99.7 4,4-isomer purity, and recrystallization of commercial grade 93% 4,4-isomer purity resulted in a product of about 99.0% 4,4-isomer purity. A batch of 99.5% 4,4-isomer purity BPADA was recrystallized again from o-DCB as described above to afford an 85% yield of 99.9% 4,4-isomer purity product.

**Table 3.**

| **Batch #** | **Total #s DA in Batch** | **Isolated Weight (#)** | **Starting 4,4-DA Content** | **Product 4,4-DA Content** |
|---|---|---|---|---|
| 1 | ∼2000 | 1400 | 96.6 | 99.7 |
| 2 | ∼2000 | 1500 | 96.5 | 99.5 |
| 3 | ∼2000 | 1309 | 94.9 | 99.3 |
| 4 | ∼2000 | 1900 | 93 | 99 |
| 5 | ∼2500 | 2100 | 93 | 98.8 |
| 6 | ∼2500 | 2100 | 96.3 | 99.3 |
| 7 | ∼3000 | 2300 | 99.5 | 99.9 |

### Procedure 18. Large-scale preparation of polyetherimide with high 4,4-isomer purity BPADA.

With reference to U.S. Patent No, 4,835,249 to General Electric, batches of polymer were formulated in a 1500-gallon steam jacketed vessel with the recrystallized dianhydride of formula (2) of various 4,4-isomer purities at 25% solids. The amount of monoimide of formula (7) in the dianhydride, which can act as a chain stopper was previously determined by HPLC. The vessel was charged with distilled o-DCB. The o-DCB was heated to reflux to remove water and then cooled to less than 50 °C. Aniline was then added to the vessel, followed by the solid dianhydride (2). The amount of aniline (a chain stopper) was adjusted to ultimately manufacture a polymer of the desired molecular weight and melt index (a measure of viscosity and molecular weight). The total amount of chain stopper (aniline and the imide-anhydride) is controlled. The vessel is swept with nitrogen for 15 minutes, and then molten para-phenylene diamine is metered in. Again, the ratio of aniline, BPADA, and pPD is carefully adjusted to produce a resin of desired molecular weight. The vessel is heated to 120°C, held at 120°C for 20 minutes, heated to 130°C, and then heated to 180°C, held for 1 hour hot. This procedure affords a prepolymer that is not soluble in the solvent. A small sample of the prepolymer slurry is taken and heated to 380°C under nitrogen in a glass tube to complete the polymerization. The heat-treated polymer is removed from the tube and pressed into a film and analyzed by FTIR to determine the mole percent of anhydride and amine end groups as described in U.S. Patent No. 7,041,773, to General Electric.

BPADA or pPD is added to the vessel to adjust the stoichiometry of the resin to the desired level. The reaction mixture is heated for an additional hour and the stoichiometry of the polymer is checked again.

Once the batch is adjusted to the target stoichiometry, it is dropped hot to another stirred vessel and cooled to less than 60°C with the use of an external cooling jacket. The batch is then fed in small batches to a centrifuge (about 300 pounds of dry weight pre-polymer per batch), as the balance of the material continues to cool. The batch is spun at about 750-900 rpm for 3 hours to afford a prepolymer that is about 50% solids. The material is then dropped to the dryer at about 50% solids. The mini-batch is dried for 3 hours at 200 mm Hg pressure, at 120°C, and then dropped to a super-sack at about 85% solids.

Finally, the pre-polymer is fed to counter-rotating non-intermeshing devolatilizing twin-screw extruder, operated at about 340°C, to yield molten polymer strands, which were cooled in a water bath and pelletized to produce the finished resin. In this manner, several 800 to 1200 pound batches of resin were produced as shown in Table 4. The amounts of BPADA, pPD, aniline, and solvent were adjusted for each batch depending on the isomer purity of the BPADA, the batch size and target molecular weight.

**Table 4.**

| Ex. No. | BPADA purity by HPLC | % Chainstopper (CS)* | % (7) in BPADA | BPADA, Kg | Aniline, Kg | pPD, Kg |
|---|---|---|---|---|---|---|
| 12 | 98.9 (nominal) | 6.55 | 0.96 | 485.8 | 10.9 | 93.8 |
| 13 | 99.45 | 5.90 | 0.67 | 329.15 | 6.76 | 64.06 |
| 14 | 99.9 | 6.45 | 0.42 | 483.06 | 11.12 | 93.4 |

| | | | | | | |
|---|---|---|---|---|---|---|
| *%CS is defined as 100*(mole (7) + mole aniline) divided by (mole (7) + mole aniline) +(mole pPD + mole BPADA). | | | | | | |

### Procedure 19. Compounding with stabilizer.

The polyetherimides were optionally further compounded with stabilizing additives as follows. The polyetherimide pellets obtained from procedure 18 were dry-blended with 500 ppm of a stabilizing additive package, using a rotating mixer set for 30 minutes. The blend was dried at 235°F (113°C) for 8 hrs. This mixture was then fed to a 30 mm twin screw, vacuum vent extruder at 316°C to 360°C through 6 zones, to melt and mix the additives. The screws ran at 300 rpm and a vacuum was drawn to 27 inches (68.6 cm) of mercury. The extruded molten strands were cooled in a water bath, pelletized, and packed.

### Procedure 20. Melt Index measurement

The Melt Index (MI) of the polymer was measured using ASTM standard D1238-04c, "Standard Test Method for Melt Flow Rates of Thermoplastics by Extrusion Plastometer.." The MI was measured at 337°C, under a weight of 6.7 Kg.

### Procedure 21. Alternate procedure for viscosity determination by capillary rheometry.

Viscosity at high shear rates were also determined by a modified version of procedure 6, according to ISO standard 11443:2005, Plastics - "Determination of the fluidity of plastics using capillary and slit-die rheometers." A Dynisco LCR7000 rheometer, equipped with a 10 KN force transducer and a 1 mm capillary with an L/D of 10/1 was used. A range of shear rates from 100 to 10,000 was covered in each run. The measurements were made at 390°C unless specified otherwise. Rabinowitsch correction was not applied to the data. End pressure losses were not corrected for. Reported data are therefore the apparent viscosity and apparent shear rate. Apparent viscosities at 390°C under a 1000s⁻¹ apparent shear rate are reported here.

### EXAMPLES

### Example 1. Synthesis and characterization of 100% isomerically pure 4,4'-BPADA-pPD.

A BPADA-pPD polyetherimide with 100% isomerically pure 4,4'-BPADA was synthesized according to procedure 2, using m-cresol as the polymerization solvent. Polymerization details such as the specific amounts of monomers, endcapper, and solvent used are listed in Table 3.

The as-polymerized, dried powder was characterized by DSC. The powder exhibited a melting endotherm with a melting enthalpy (ΔHₘ) of 26.4 J/g, presumably via crystallization from the solution state during the synthesis and precipitation process. The T_{g} and Tₘ of the as-synthesized powder as measured by DSC were 224°C and 291°C, respectively.

### Example 2 (Comparative). Synthesis and characterization of 100% isomerically pure BP ADA-mPD.

The procedure of Example 1 was followed, except that mPD was used instead of pPD. Thus, a BPADA-mPD polymer with 100% isomerically pure 4,4'-BPADA was synthesized according to procedure 2. Details are shown in Table 3.

The results produced a dried powder that displayed no discernable melting endotherm, which means that the composition was not crystallizable from the solution state, unlike the analogous BPADA-pPD composition. The T_{g} of the powder was 212°C.

### Example 3. Synthesis and characterization of BPADA-pPD with 99% isomerically pure 4,4'-BPADA.

BPADA-pPD polyetherimide with 99% isomerically pure 4,4'-BPADA was synthesized according to procedure 2. Details are shown in Table 3. The as-polymerized, dried powder was characterized by DSC. It exhibited a melting endotherm with a melting enthalpy (ΔHₘ) of 23.5 J/g. The T_{g} and Tₘ of the as-synthesized powder as measured by DSC were 224°C and 288°C, respectively. The melt viscosity of the material measured according to procedure 5 was 6000 poise at 370°C.

### Example 4. Synthesis and characterization of BPADA-pPD with 98.5% isomerically pure 4,4'-BPADA.

A BPADA-pPD polyetherimide with 98.5% isomerically pure 4,4'-BPADA was synthesized according to procedure 3b, with the amounts of monomers, solvent etc as listed in the procedure. The resulting pellets were characterized by capillary and parallel plate rheology. The viscosity at 1000s⁻¹ shear rate (measured according to procedure 6) at 400°C was 3100 Poise. Viscosity at low shear rate via parallel plate measurement (Procedure 5) was 3400 Poise at 400°C.

### Example 5. Synthesis and characterization of BPADA-pPD with 96.3% isomerically pure 4,4'-BPADA.

A commercially available sample of BPADA-pPD polyetherimide with 96.3% isomerically pure 4,4'-BPADA was obtained. The material was manufactured according to procedure 3b as shown in Table 5; however, the exact amounts of monomers, solvents, etc. was not easily traceable. The pellets were characterized by capillary and parallel plate rheology. The viscosity at 1000s⁻¹ shear rate measured at 400°C via procedure 6 was 2600 Poise. Viscosity at low shear rate via parallel plate measurement, procedure 5, at 400°C was 3000 Poise.

**Table 5.**

| Ex. No. | BPADA isomer purity, % by NMR | Other impurities, mol% | m-cresol, mL | BPADA, g | pPD, g | mPD, g | PA, g |
|---|---|---|---|---|---|---|---|
| 1 | 100 | None detected | 240 | 50.00 | 10.91 | | 1.44 |
| 2 | 100 | None detected | 120 | 25.00 | | 5.35 | 0.44 |
| 3 | 99 | 1.22% monoimide | 160 | 31.62 | 6.81 | | 0.79 |

### Example 6. Fiber spinning and characterization - BPADA-pPD with 100% isomerically pure 4,4'-BPADA.

The polymer resulting from Example 1 was spun using a DACA microcompounder, per Procedure 7, using a single hole spinneret with a diameter of 500 micrometers. The melt temperature was maintained at 380°C. The throughput was maintained at a screw speed of 5 rpm and the resulting strand was wound at 110 m/min corresponding to a final diameter of 17 micrometers.

The resulting fibers had an average tenacity of 7.3 gpd (tenacity greater than about 3 gpd is desired), and a hot-air (250°C) shrinkage value of 21% (shrinkage less than 20% is desired). The as-spun fiber clearly showed a melting endotherm in DSC, with a Tₘ of 303°C, and a melting enthalpy (ΔHₘ) of 11 J/g. The T_{g} of the fiber was 217°C.

In order to further increase crystallinity and enhance dimensional stability, the fiber was subjected to a two-stage heat-treatment under constraint at 250°C, then 280°C, for 5 minutes each. The resulting heat-treated fiber had a tenacity of 7.2 gpd, and a hot-air shrinkage value of less than 1% measured at 250°C. High isomer purity combined with high chain orientation imparted by the spinning process resulted in a fiber with significant crystallinity even as-spun. Heat-treatment with constraint against dimensional change resulted in further improvement in fiber properties.

### Example 7 (Comparative). Fiber spinning and characterization - BPADA-mPD with 100% isomerically pure 4,4'-BPADA.

The polymer resulting from Example 2 was spun using a DACA microcompounder, per Procedure 7, using a single hole spinneret with a diameter of 500 micrometers. The melt temperature was maintained at 380°C. The throughput was maintained at a screw speed of 5 rpm and the resulting strand had a final diameter of 38 □ micrometers.

The resulting fibers had an average tenacity of 4.1 gpd, and a hot-air (250°C) shrinkage value of 83%. The as-spun fiber did not exhibit a melting endotherm in DSC, despite the high 4,4'-BPADA isomer purity and the relatively high degree of polymer chain orientation as indicated by the hot-air shrinkage.

### Example 8. Fiber spinning and characterization -BPADA-pPD with 99% isomerically pure 4,4'-BPADA.

The polymer resulting from Example 3 was spun using a DACA microcompounder, per Procedure 7, using a single hole spinneret with a diameter of 500 micrometers. The melt temperature was maintained at 400°C. The throughput was maintained at a screw speed of 5 rpm and the resulting strand was wound at 166 m/min corresponding to a final diameter of 21 micrometers.

The resulting fibers had an average tenacity of 5.9 gpd, and a hot-air (250°C) shrinkage value of 64%. The as-spun fiber clearly showed a melting endotherm in DSC, with a Tₘ of 297°C, and a melting enthalpy (ΔHₘ) of 6 J/g. The T_{g} of the fiber was 219°C.

In order to further increase crystallinity and enhance dimensional stability, the fiber was subjected to a two-stage heat-treatment under constraint at 250°C, then 280°C, for 5 minutes each. The resulting heat-treated fiber had a tenacity of 5.2 gpd, and a hot-air shrinkage value of less than 1% measured at 250°C. The heat-treated fiber showed a melting endotherm in DSC, with a Tₘ of 305°C, and a melting enthalpy (ΔHₘ) of 12 J/g.

### Example 9. Fiber spinning and characterization -BPADA-pPD with 98.5% isomerically pure 4,4'-BPADA.

The polymer resulting from Example 4 was extruded as described in Procedure 7, at an extrusion temperature of 385°C, through a capillary 500 micrometers in diameter. A take-up speed of 300m/min was used, resulting in a fiber with average diameter of 24.2 micrometers.

The resulting fiber had an average tenacity of 5.9 grams per denier, and a hot-air shrinkage value of 75%. The as-spun fiber clearly showed a melting endotherm in DSC, with a Tₘ of 300°C, and a melting enthalpy (ΔHₘ) of 14 J/g. The T_{g} of the fiber was 226°C.

This fiber was subjected to a heat-treatment under constraint at 260°C for 15 minutes to yield a fiber with tenacity 4.6 gpd, and a hot-air shrinkage value of 7.5%. Melting enthalpy of the heat-treated fiber was 31.6 J/g. The Tₘ was 304 °C. T_{g} was not clearly discernible.

### Example 10 (Comparative). Fiber spinning and characterization - commercial BPADA-pPD with 96.3% isomerically pure 4,4'-BPADA.

The polymer resulting from Example 5 was extruded as described in Procedure 7, at an extrusion temperature of 395°C, through a capillary 500 micrometers in diameter. A take-up speed of 275 m/min was used, resulting in a fiber with average diameter of 24 micrometers.

The resulting fiber had an average tenacity of 5.4 grams per denier, and a hot-air shrinkage value of 87.5%. The as-spun fiber did not show a discernible melting peak in DSC. This fiber was subjected to a heat-treatment under constraint at 260°C for 15 minutes to yield a fiber with tenacity 3.3 gpd, and a hot-air shrinkage value of 27.5%. The heat-treated fiber showed a melting endotherm, with a melting enthalpy of 6.6 J/g. The heat-treated fiber had T_{g} and Tₘ of 224°C and 291°C respectively.

### Example 11 (Comparative). Alternate heat treatment conditions - commercial BPADA-pPD with 96.3% isomerically pure 4,4'-BPADA

The as-spun fiber from Example 10 was heat-treated under a different set of conditions (250°C for 15 min, followed by 260°C for 15 min), to allow the fiber to further build crystallinity and dimensional stability.

After this two-step heat-treatment process, the resulting fiber showed a tenacity of 3.3 gpd, a hot-air shrinkage of 5%, and ΔHₘ 14 J/g. The heat-treated fiber had T_{g} and Tₘ of 226°C and 293°C respectively.

Table 6 shows a summary of the polymer syntheses and characterization of Examples 1-5. Table 7 shows a summary of the fiber spinning and characterization of Examples 6-11.

**Table 6.**

| | Example No | Units | 1 | 2 | 3 | 4 | 5 |
|---|---|---|---|---|---|---|---|
| Monomer details | Anhydride | | BPADA | BPADA | BPADA | BPADA | BPADA |
| | Amine | | pPD | mPD | pPD | pPD | pPD |
| | Anhydride purity - NMR | % 4,4'-linkages / (% 4,4'- + 3,4'- + 3,3'-linkages) | 100 | 100 | 99 | 98.5 | 96.3 |
| Polymer details | Polymerization solvent | | m-cresol | m-cresol | m-cresol | o-DCB | o-DCB |
| | M_{w} (GPC, CHCl₃:HFIP) | Kg/mol | 39 | 46.4 | 39.6 | | 34.9 |
| | Mₙ | Kg/mol | 16.9 | 17.2 | 15.9 | | 15.2 |
| | As-polymerized T_{g}, DSC | °C | 224 | 212 | 224 | | |
| | As-polymerized Tₘ, DSC | °C | 291 | None | 288 | | |
| | ΔHₘ as-polymerized (by DSC) | J/g | 26.4 | 0 | 23.5 | | |
| Rheology | Dynamic viscosity (Parallel plate) at 400°C | Poise | 12370 (370C) | | 6000 (370C) | 3411 | 3000 |
| | Viscosity by Capillary Rheometry - 400°C, 1000s⁻¹ | Poise | | | | 3134 | 2600 |

**Table 7.**

| | Example No | Units | 6 | 7 | 8 | 9 | 10 | 11 |
|---|---|---|---|---|---|---|---|---|
| Fiber Extrusion conditions (spinneret hole diameter d₁ = 500 microns | Melt temperature | °C | 380 | 380 | 400 | 385 | 395 | 395 |
| | Take-up velocity | m/min | 110 | | 166 | 300 | 275 | 275 |
| | Fiber diameter, d₂ | microns | 17 | 38 | 21 | 24.2 | 24 | 24 |
| | Drawdown ratio (d₁/d₂)² | | 865 | 173 | 567 | 430 | 430 | 430 |
| As-spun fiber properties | Tenacity | gpd | 7.3 | 4.1 | 5.9 | 5.9 | 5.4 | 5.4 |
| | Hot air shrinkage (260°C, 10 min) | % | 21% (250°C) | 83% (250°C) | 64% (250°C) | 75 | 87.5 | 87.5 |
| | T_{g} (by DSC) | | 217 | | 219 | 226 | | - |
| | Tₘ (by DSC) | | 303 | None | 297 | 300 | None | None |
| | ΔH (by DSC) | J/g | 11 | 0 | 6 | 14 | 0 | 9 |
| Annealing (Heat-treatment) conditions | Constrained against shrinkage | | Yes | | Yes | Yes | Yes | Yes |
| | Heat-set / annealing temperature | °C | 250, then 280 | | 250, then 280 | 260 | 260 | 250, then 260 |
| | Heat-set / annealing time | min | 5+5 | | 5+5 | 15 | 15 | 15 + 15 |
| Post-annealing properties | Tenacity | gpd | 7.2 | | 5.2 | 4.6 | 3.3 | 3.3 |
| | Hot air shrinkage (260C, 10 min) | % | <1 (250°C) | | <1 (250°C) | 7.5 | 27.5 | 5 |
| | T_{g} (by DSC) | °C | | | | n.d. | 224 | 226 |
| | Tₘ (by DSC) | °C | | | 305 | 304 | 291 | 293 |
| | ΔH (by DSC) | J/g | | | 12 | 31.6 | 6.6 | 14 |

### Example 12. Large-scale synthesis of BPADA-pPD polyetherimide with 99% isomerically pure 4,4'-BPADA

This batch of polyetherimide was prepared according to procedure 18, with the amounts of BPADA, pPD, and aniline as listed in row 1 of table 4. The BPADA used was a blend of 98.8% isomerically pure BPADA (as measured by HPLC) and 99.9% pure BPADA, in amounts such that the resulting blend had a nominal purity of 98.9%. The polymer was finished in the devolatilizing extruder as in procedure 18. No further processing was done to the pellets at this stage.

The resulting polymer had a number-average molecular weight (Mn) of 15,545 and a weight-average molecular weight (Mw) of 35,971 as measured by GPC The melt index (MI) of the polymer as measured by procedure 20 was 1.78. The viscosity as measured by parallel plate rheometry (procedure 5) was 2452 poise at 400°C. High-shear rate (capillary) viscosity as measured by procedure 21 was 2967 poise at 390°C.

### Example 13. Incorporation of stabilizing additive into Example 12.

The polyetherimide pellets from example 12 were compounded with 500 ppm of a stabilizing additive (Irgafos 168), according to procedure 19. The polymer thus made was characterized and shown to have an Mₙ of 15,254 and an M_{w} of 35,213 as measured by GPC (procedure 4) The melt index (MI) of the polymer as measured by procedure 20 was 1.94. The viscosity as measured by parallel plate rheometry (procedure 5) was 2400 poise at 400°C. Capillary viscosity as measured by procedure 21 was 2801 poise at 390°C. The isomer purity was measured in the polymer using NMR (by procedure 16); it was found to be 99.3% 4,4'-BPADA.

### Example 14. Large-scale synthesis of BPADA-pPD polyetherimide with 99.5% isomerically pure 4,4'-BPADA.

This batch of polyetherimide was prepared according to procedure 18, with the amounts of BPADA, pPD, and aniline as listed in row 2 of table 4. The BPADA used was a blend of 99.3% isomerically pure BPADA (as measured by HPLC) and 99.5% pure BPADA, in amounts such that the resulting blend had a nominal purity of 99.45%. The polyetherimide pellets from the devolatilizing extruder were compounded with stabilizing additive as described in procedure 19. The isomer purity measured in the resulting polymer using NMR (by procedure 16) was found to be 99.4% 4,4'-BPADA.

The resulting polymer had an Mₙ of 17,070 and an Mw of 39,198 as measured by GPC (procedure 4 -The melt index of the polymer as measured by procedure 20 was 1.22. The viscosity as measured by parallel plate rheometry (procedure 5) was 3680 poise at 400°C. Capillary viscosity as measured by procedure 21 was 3749 poise at 390°C.

### Example 15. Large-scale synthesis of BPADA-pPD polyetherimide with 99.9% isomerically pure 4,4'-BPADA.

This batch of polyetherimide was prepared according to procedure 18, with the amounts of BPADA, pPD, and aniline as listed in row 3 of Table 2. The isomer purity of the BPADA used was measured by HPLC to be 99.9% 4,4' linkages. The polymer pellets from the devolatilizing extruder were compounded with stabilizing additive as described in procedure 19. The isomer purity measured in the resulting polymer using NMR (by procedure 16) was found to be 99.7% 4, 4' BPADA.

The resulting polymer had a melt index (MI) of 2.17. The viscosity as measured by parallel plate rheometry was 2150 poise at 400°C. Capillary viscosity as measured by procedure 21 was 2515 poise at 390°C.

### Example 16. Fiber spinning and characterization of BPADA-pPD polyetherimide with 98.9% isomerically pure 4,4'-BPADA made by large-scale synthesis.

The polymer resulting from Example 12 was spun using a DACA microcompounder, per Procedure 7 using a single hole spinneret with a diameter of 500 micrometers. The melt temperature was maintained at 370°C. The throughput was maintained at a screw speed of 5 rpm and the resulting strand was wound at 690 m/min corresponding to a final diameter of 21 micrometers.

The resulting fibers had an average tenacity of 3.04 gpd, and a hot-air (260°C) shrinkage value of 85%. The as-spun fiber clearly showed a melting endotherm in DSC, with a T_{g} (on first heat) of 208°C, Tₘ of 305°C, and a melting enthalpy (ΔHₘ) of 25.4 J/g.

In order to further increase crystallinity and enhance dimensional stability, the fiber was subjected to a two-stage heat-treatment under constraint. The fiber was wound on a glass cylinder and introduced into a 250°C oven where it was held for 10 minutes; the oven temperature was then ramped to 280°C with the sample still in it, and the fiber was held for a further 5 min once the oven temperature reached 280°C. The resulting heat-treated fiber had a tenacity of 4.3 gpd, and a hot-air shrinkage value of 0% measured at 260°C.

### Example 17. Fiber spinning and characterization of BPADA-pPD polyetherimide with 98.9% isomerically pure 4,4'-BPADA made by large-scale synthesis, with stabilizing additive.

The polyetherimide resulting from Example 13 was spun using a DACA microcompounder, per Procedure 7 using a single hole spinneret with a diameter of 500 micrometers. The melt temperature was maintained at 385°C. The throughput was maintained at a screw speed of 5 rpm and the resulting strand was wound at 829 m/min corresponding to a final diameter of 17 micrometers.

The resulting fibers had an average tenacity of 5.5 gpd, and a hot-air (260°C) shrinkage value of 66%. The as-spun fiber clearly showed a melting endotherm in DSC, with a T_{g} (on first heat) of 204°C, Tₘ of 303.6°C, and a melting enthalpy (ΔHₘ) of 21 J/g.

In examples 16 and 17, a combination of high isomer purity, appropriate molecular weight, and processing led to high levels of as-spun crystallinity relative to lower-isomer purity samples (e.g. Example 9). Properties can be further improved by appropriate heat-treatment, as shown.

### Example 18. Fiber spinning and characterization of BPADA-pPD polyetherimide with 99.5% isomerically pure 4,4'-BPADA made by large-scale synthesis, with stabilizing additive.

The polyetherimide resulting from Example 14 was spun using a DACA microcompounder, per Procedure 7 using a single hole spinneret with a diameter of 500 micrometers. The melt temperature was maintained at 385°C. The throughput was maintained at a screw speed of 5 rpm and the resulting strand was wound at 442 m/min corresponding to a final diameter of 26.7 micrometers.

The resulting fibers had an average tenacity of 4.9 gpd, and a hot-air (260°C) shrinkage value of 75%. The as-spun fiber clearly showed a melting endotherm in DSC, with a T_{g} (on first heat) of 212°C, Tₘ of 303.9°C, and a melting enthalpy (ΔHₘ) of 10.8 J/g.

This example is a slightly higher molecular weight polymer compared to examples 16 and 17; it has potential for higher tenacity at a given jet-stretch, and also has the potential for enhanced performance via post-spinning operations such as drawing, although the as-spun crystallinity under the conditions tested was moderate.

### Example 19. Fiber spinning and characterization - BPADA-pPD with 99.9% isomerically pure 4,4'-BPADA made by large-scale synthesis, with stabilizing additive.

The polyetherimide resulting from Example 15 was spun using a DACA microcompounder, per Procedure 7, using a single hole spinneret with a diameter of 500 micrometers. The melt temperature was maintained at 370°C. The throughput was maintained at a screw speed of 5 rpm and the resulting strand was wound at 940 m/min corresponding to a final diameter of 24 micrometers.

The resulting fibers had an average tenacity of 4.6 gpd, and a hot-air (260°C) shrinkage value of 85%. The as-spun fiber clearly showed a melting endotherm in DSC, with a T_{g} (on first heat) of 208°C, Tₘ of 304.4°C, and a melting enthalpy (ΔHₘ) of 19.4 J/g.

In order to further increase crystallinity and enhance dimensional stability, the fiber was subjected to a two-stage heat-treatment under constraint. The fiber was wound on a glass cylinder and introduced into a 250°C oven where it was held for 10 minutes; the oven temperature was then ramped to 280°C, and the fiber was held for 5 min at 280°C. The resulting heat-treated fiber had a tenacity of 4.7 gpd, and a hot-air shrinkage value of 0% measured at 260°C.

Once again, a combination of high isomer purity, appropriate molecular weight, and processing resulted in high as-spun crystallinity, with further improvement in properties when heat-treated.

Although the nominal purity as measured by HPLC shows differences between examples 17, 18 and 19, the error bars associated with the measurement are finite; also, at very high 4,4'-BPADA purities, other impurities, such as those in the pPD, also start to become a significant factor; therefore, results such as the as-spun crystallinity may not scale perfectly with the isomer purity within the narrow range (99 - 99.9%) shown in examples 16 - 19. However, the general trend of improved crystallizability with increased isomer purity is clear, with isomer purities of 99% and above being definitely faster crystallizing compared to 96.3 or even 98%.

A summary of examples 12-19 is presented in Tables 8 and 9. DSC thermograms of as-spun fibers from examples 16 - 19 are shown in Figure 1.

**Table 8.**

| | Example No. | Units | 12 | 13 | 14 | 15 |
|---|---|---|---|---|---|---|
| Monomer details | Anhydride | | BPADA | BPADA | BPADA | BPADA |
| | Amine | | pPD | pPD | pPD | pPD |
| | Anhydride purity - HPLC | | 99.0 | 99.0 | 99.5 | 99.9 |
| Polymer details | Polymerization solvent | | oDCB | oDCB | oDCB | oDCB |
| | Anhydride purity - polymer NMR | % 4,4' linkages / (total) | | 99.3 | 99.4 | 99.7 |
| | Mₙ (GPC, CHCl₃:HFIP) | g/mol | 15,545 | 15,254 | 17,070 | |
| | M_{w} | g/mol | 35,971 | 35,213 | 39,198 | |
| Rheology | Melt Index (under 6.6 Kg load; 337°C) | g/min | 1.78 | 1.94 | 1.22 | 2.17 |
| | Dynamic viscosity (Parallel plate) at 400 °C | Poise | 2452 | 2400 | 3680 | 2150 |
| | Capillary viscosity - 390C, 1000s⁻¹ Proc. 21 | Poise | 2967 | 2801 | 3749 | 2515 |

**Table 9.**

| | Example No. | Units | 16 | 17 | 18 | 19 |
|---|---|---|---|---|---|---|
| Fiber Extrusion conditions | Spinneret hole (die) diameter (d₁) | microns | 500 | 500 | 500 | 500 |
| | No. of Holes | | 1 | 1 | 1 | 1 |
| | Melt temperature | °C | 370 | 385 | 385 | 370 |
| | Max Take-up velocity | m/min | 690 | 829 | 442 | 940 |
| | Min Fiber diameter | microns | 24 | 17 | 26.7 | 24 |
| | Max drawdown ratio (d₁/d₂)^2 | | 434 | 865 | 351 | 434 |
| As-spun properties | Max Tenacity | gpd | 3.04 | 5.5 | 4.93 | 4.6 |
| | Hot air shrinkage (260°C, 10 min) at max tenacity | % | 85 | 66 | 75 | 85 |
| | T_{g} (by DSC) | °C | 208 | 204 | 212 | 208 |
| | Tₘ (by DSC) | °C | 305 | 303.6 | 303.9 | 304.4 |
| | ΔH (by DSC) | J/g | 25.4 | 21 | 10.8 | 19.4 |
| Annealing cond itions | Constrained against shrinkage | Yes/No | Yes | | | Yes |
| | Heat-set / annealing temperature | °C | 250 + 280 | | | 250 + 280 |
| | Heat-set / annealing time | min | 10+ 5 | | | 10+ 5 |
| Post-annealing properties | Tenacity | gpd | 4.3 | | | 4.7 |
| | Hot air shrinkage (260C, 10 min) | % | 0 | | | 0 |

## Claims

1. A composition comprising a crystallizable polyetherimide derived from:
(a) a dianhydride component, comprising 96.8 mole % or more of 4,4'- bisphenol A dianhydride of formula (2) 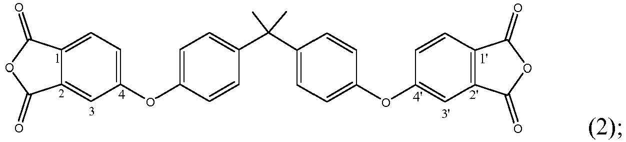 and
(b) a diamine component, consisting of para-phenylenediamine and less than 5.0 mole % of meta-phenylenediamine and optionally one or more diamine selected from the group consisting of p-phenylenediamine; benzidine; 1,5-diaminonaphthalene; bis(4-aminophenyl)methane; bis(4-aminophenyl)propane; bis(4-aminophenyl)sulfide; bis(4-aminophenyl)ether; 4,4'-diaminodiphenylpropane; 4,4'-diaminodiphenylmethane(4,4'-methylenedianiline); 4,4'-diaminodiphenylsulfide; 4,4'-diaminodiphenylsulfone; 4,4'-diaminodiphenylether(4,4'-oxydianiline); 1,5-diaminonaphthalene; 3,3'dimethylbenzidine; 4,3'-diaminodiphenylether; 1,3-bis(4-aminophenoxy)benzene; 4,4'-bis(4-aminophenoxy)biphenyl; and combinations thereof.;
wherein the crystallizable polyetherimide has a Tₘ from 250°C to 400°C and the difference between the Tₘ and T_{g} of the composition is equal to or more than 50°C.

2. The composition of Claim 1, wherein the composition further comprises at least one stabilizer.

3. The composition of any of Claims 1 or 2, having an apparent viscosity, measured at a shear rate of 1000 s⁻¹, of more than 0 and less than 1,000 Pascal seconds (10,000 poise) at a temperature of less than 400°C.

4. The composition of any of Claims 1-3, wherein the composition further comprises an end-capping agent, preferably selected from the group consisting of phthalic anhydride, aniline, and combinations thereof.

5. A fiber comprising any of the compositions of Claims 1-4.

6. The fiber of claim5, wherein the fiber has one or more of a tensile strength from 2 to 20 grams per denier, and a hot-air shrinkage of less than or equal to 20% after exposure to 260°C air for 10 minutes.

7. An article comprising a plurality of the fibers of claim 5 or 6.

8. The article of Claim 7, wherein article is a woven fabric or a non-woven fabric.

9. A method of making a fiber, comprising
extruding, through an orifice under conditions sufficient to form at least one fiber, a crystallizable polyetherimide composition of any of claims 1-4.

10. The method of Claim 9 wherein the method further comprises drawing the at least one fiber.

11. The method of any of Claims 9-or 10, wherein the method further comprises heat-treating the at least one fiber under a constraint effective to crystallize the polyetherimide.

12. A method of manufacture of a fabric, comprising
extruding, through an orifice under conditions sufficient to form at least one fiber, a crystallizable polyetherimide composition of any of claims 1-4;
optionally combining a plurality of the fibers into a yarn; and
weaving the fiber or the yarn into a fabric.

## Patentansprüche

1. Zusammensetzung umfassend ein kristallisierbares Polyetherimid, das abgeleitet ist von:
(a) einer Dianhydridkomponente, umfassend 96,8 Mol-% oder mehr von 4,4'-Bisphenol-A-dianhydrid der Formel (2) 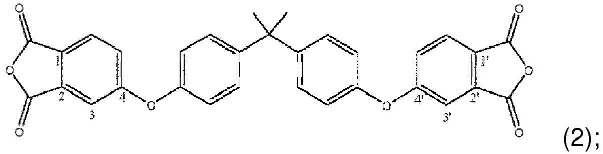 und
(b) einer Diaminkomponente, bestehend aus para-Phenylendiamin und weniger als 5,0 Mol-% meta-Phenylendiamin und gegebenenfalls einem oder mehreren Diaminen, die ausgewählt sind aus der Gruppe bestehend aus p-Phenylendiamin; Benzidin; 1,5-Diaminonaphthalen; Bis(4-aminophenyl)methan; Bis(4-aminophenyl)propan; Bis(4-aminophenyl)sulfid; Bis(4-aminophenyl)ether; 4,4'-Diaminodiphenylpropan; 4,4'-Diaminodiphenylmethan(4,4'-methylendianilin); 4,4'-Diaminodiphenylsulfid; 4,4'-Diaminodiphenylsulfon; 4,4'-Diaminodiphenylether(4,4'-oxydianilin); 1,5-Diaminonaphthalen; 3,3'-Dimethylbenzidin; 4,3'-Diaminodiphenylether; 1,3-Bis(4-aminophenoxy)benzol; 4,4'-Bis(4-aminophenoxy)biphenyl; und Kombinationen davon;
wobei das kristallisierbare Polyetherimid eine Tₘ von 250 °C bis 400 °C aufweist und die Differenz zwischen der Tₘ und T_{g} der Zusammensetzung gleich oder mehr als 50 °C beträgt.

2. Zusammensetzung nach Anspruch 1, wobei die Zusammensetzung ferner mindestens einen Stabilisator umfasst.

3. Zusammensetzung nach irgendeinem der Ansprüche 1 oder 2, aufweisend eine bei einer Schergeschwindigkeit von 1000 s⁻¹ gemessene scheinbare Viskosität von mehr als 0 und weniger als 1.000 Pascalsekunden (10.000 Poise) bei einer Temperatur von weniger als 400 °C.

4. Zusammensetzung nach irgendeinem der Ansprüche 1-3, wobei die Zusammensetzung ferner ein Endverkappungsmittel umfasst, das vorzugsweise aus der Gruppe bestehend aus Phthalsäureanhydrid, Anilin und Kombinationen davon ausgewählt ist.

5. Faser umfassend irgendeine der Zusammensetzungen nach den Ansprüchen 1-4.

6. Faser nach Anspruch 5, wobei die Faser eines oder mehrere von einer Zugfestigkeit von 2 bis 20 Gramm pro Denier und einem Heißluftschrumpf von weniger als oder gleich 20 % nach 10 Minuten Einwirkung von 260 °C aufweisender Luft aufweist.

7. Artikel umfassend eine Vielzahl der Fasern nach Anspruch 5 oder 6.

8. Artikel nach Anspruch 7, wobei der Artikel ein gewebter Stoff oder ein nichtgewebter Stoff ist.

9. Verfahren zur Herstellung einer Faser, umfassend
das Extrudieren einer kristallisierbaren Polyetherimidzusammensetzung nach irgendeinem der Ansprüche 1-4 durch eine Öffnung unter Bedingungen, die für die Bildung mindestens einer Faser ausreichen.

10. Verfahren nach Anspruch 9, wobei das Verfahren ferner das Ziehen der mindestens einen Faser umfasst.

11. Verfahren nach irgendeinem der Ansprüche 9 oder 10, wobei das Verfahren ferner die Wärmebehandlung der mindestens einen Faser unter einer Einschränkung, die die Kristallisation des Polyetherimids bewirkt, umfasst.

12. Verfahren zur Herstellung eines Stoffs, Folgendes umfassend:
Extrudieren einer kristallisierbaren Polyetherimidzusammensetzung nach irgendeinem der Ansprüche 1-4 durch eine Öffnung unter Bedingungen, die für die Bildung mindestens einer Faser ausreichen;
gegebenenfalls Vereinigen einer Vielzahl der Fasern zu einem Garn; und Verweben der Faser oder des Garns zu einem Stoff.

## Revendications

1. Composition comprenant un polyétherimide cristallisable dérivé de :
(a) un constituant dianhydride comprenant 96,8 % en moles ou plus de dianhydride de 4,4'-bisphénol A de formule (2) 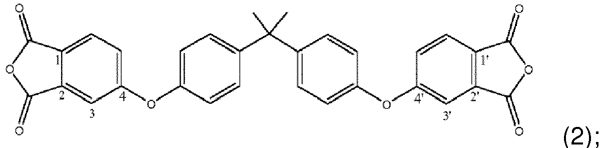 et
(b) un constituant diamine, constitué de para-phénylènediamine et de moins de 5,0 % en moles de méta-phénylènediamine et éventuellement d'une ou plusieurs diamines choisies dans le groupe constitué par la p-phénylènediamine ; la benzidine ; le 1,5-diaminonaphtalène ; le bis(4-aminophényl)méthane ; le bis(4-aminophényl)propane ; le bis(4-aminophényl)sulfure ; le bis(4-aminophényl)éther ; le 4,4'-diaminodiphénylpropane ; la 4,4'-diaminodiphénylméthane(4,4'-méthylènedianiline) ; le 4,4'-diaminodiphénylsulfure ; la 4,4'-diaminodiphénylsulfone ; la 4,4'diaminodiphényléther(4,4'-oxydianiline) ; le 1,5-diaminonaphtalène ; la 3,3'-diméthylbenzidine ; le 4,3'-diaminodiphényléther ; le 1,3-bis(4-aminophénoxy)benzène ; le 4,4'-bis(4-aminophénoxy)biphényle ; et leurs combinaisons ;
dans lequel le polyétherimide cristallisable a une Tₘ de 250 °C à 400 °C et la différence entre la Tₘ et la T_{g} de la composition est supérieure ou égale à 50 °C.

2. Composition selon la revendication 1, dans laquelle la composition comprend en outre au moins un stabilisant.

3. Composition selon l'une quelconque des revendications 1 à 2, ayant une viscosité apparente, mesurée à une vitesse de cisaillement de 1 000 s⁻¹, supérieure à 0 et inférieure à 1 000 Pascal secondes (10 000 poises) à une température inférieure à 400 °C.

4. Composition selon l'une quelconque des revendications 1 à 3, dans laquelle la composition comprend en outre un agent de coiffage des extrémités, choisi de préférence dans le groupe constitué par l'anhydride phtalique, l'aniline et leurs combinaisons.

5. Fibre comprenant l'une quelconque des compositions selon les revendications 1 à 4.

6. Fibre selon la revendication 5, dans laquelle la fibre présente une ou plusieurs caractéristiques parmi une résistance à la traction comprise entre 2 et 20 grammes par denier, et un retrait à l'air chaud inférieur ou égal à 20 % après une exposition à l'air à 260 °C pendant 10 minutes.

7. Article comprenant une pluralité de fibres selon la revendication 5 ou 6.

8. Article selon la revendication 7, dans lequel l'article est un tissu tissé ou un tissu non-tissé.

9. Procédé de fabrication d'une fibre, comprenant
l'extrusion, à travers un orifice dans des conditions suffisantes pour former au moins une fibre, d'une composition de polyétherimide cristallisable selon l'une quelconque des revendications 1 à 4.

10. Procédé selon la revendication 9, dans lequel le procédé comprend en outre l'étirage de la/des fibre(s).

11. Procédé selon l'une quelconque des revendications 9 ou 10, dans lequel le procédé comprend en outre le traitement thermique de la/des fibre(s) sous une contrainte efficace pour cristalliser le polyétherimide.

12. Procédé de fabrication d'un tissu, comprenant
l'extrusion, à travers un orifice dans des conditions suffisantes pour former au moins une fibre, d'une composition de polyétherimide cristallisable selon l'une quelconque des revendications 1 à 4;
éventuellement la combinaison d'une pluralité des fibres en un fil ; et
le tissage de la fibre ou du fil en un tissu.
